# EUROPEAN PATENT APPLICATION

(11) **EP 2 937 990 A1**
(43) Date of publication of application: **28.10.2015**
(21) Application number: 15154375.8
(22) Date of filing: 09.02.2015
(51) Int. Cl.: H02P 27/04, H02M 1/36, H02H 9/00, H02P 1/16, H02P 29/02

(54) **Motor driving circuit**

(30) Priority: 21.04.2014 TW 103114329
(71) Applicant: Delta Electronics, Inc., Taoyuan City 333 (TW)
(72) Inventor: Lan, Wen-Han, Taoyuan City 333 (TW); Wu, Chia-Hao, Taoyuan City 333 (TW); Shih, Chih-Chung, Taoyuan City 333 (TW); Lin, Tsung-Yu, Taoyuan City 333 (TW)
(74) Representative: Nederlandsch Octrooibureau

(57) **Abstract**

A motor driving circuit is provided. The motor driving circuit includes an else inverter and a self inverter. The else inverter includes an else-inverter rectifier and an else-inverter driving circuit. The self inverter includes a self-inverter driving circuit and a soft-start protection circuit. The soft-start protection circuit includes a first and a second protection diodes, a self-inverter capacitor and a self-inverter soft-start circuit. The first protection diode is electrically connected to a first else-inverter-rectifier output and a first self-inverter-driving-circuit input. The second protection diode is electrically connected to a second else-inverter-rectifier output and a second self-inverter-driving-circuit output. The self-inverter soft-start circuit and the self-inverter capacitor are connected in series between a first cathode and a second anode of the first and the second protection diodes.

## Description

### BACKGROUND

### Field of Invention

The present invention relates to a motor driving technology. More particularly, the present invention relates to a motor driving circuit.

### Description of Related Art

Motor driving circuits are widely used in various fields of electronic engineering. During the operation of a normal motor driving circuit, the inverters therein may be connected in parallel to make the power feed back to the power supply to satisfy a more flexible design requirement. However, large currents may be generated during the operation between the inverters connected in parallel to damage the inner components of the inverters. If there is no proper design of protection mechanism, the condition of the generation of the transient large current due during the power-on of the circuit may make the inverters suffer from being damaged or being burned.

Accordingly, what is needed is a motor driving circuit to address the above issues.

### SUMMARY

An aspect of the present invention is to provide a motor driving circuit. The motor driving circuit includes an else inverter and a self inverter. The else inverter includes an else-inverter rectifier and an else-inverter driving circuit. The else-inverter rectifier includes at least one else-inverter rectifier input, a first else-inverter rectifier output and a second else-inverter rectifier output, wherein the else-inverter rectifier input is electrically connected to a power supply. The else-inverter driving circuit includes a first else-inverter driving input, a second first else-inverter driving input and at least one first else-inverter driving output, wherein the first else-inverter driving input is electrically connected to the first else-inverter rectifier output, the second else-inverter driving input is electrically connected to the second else-inverter rectifier output and the else-inverter driving output is electrically connected to a motor. The self inverter includes a self-inverter driving circuit and a soft-start protection circuit. The self-inverter driving circuit includes a first self inverter driving circuit input, a second self inverter driving circuit input and at least one self inverter driving circuit output, wherein the self inverter driving circuit output is electrically connected to the power supply. The soft-start protection circuit includes a first protection diode, a second protection diode, a self-inverter capacitor and a self-inverter capacitor soft-start circuit. The first protection diode includes a first anode and a first cathode, wherein the first anode is electrically connected to the first else-inverter-rectifier output and the first cathode is electrically connected to the first self-inverter-driving-circuit input. The second protection diode includes a second anode and a second cathode, wherein the second anode is electrically connected to the second else-inverter-rectifier output and the second cathode is electrically connected to the second self-inverter-driving-circuit output. The self-inverter soft-start circuit is electrically connected to the self-inverter capacitor in series between the first anode and the second cathode, wherein the self-inverter soft-start circuit includes a self-inverter soft-start resistor and a self-inverter soft-start switch connected in parallel.

Another aspect of the present invention is to provide a soft-start protection circuit. The soft-start protection circuit includes a first protection diode, a second protection diode, a capacitor and a soft-start circuit. The first protection diode includes a first anode and a first cathode. The second protection diode includes a second anode and a second cathode. The soft-start circuit is electrically connected to the capacitor between the first cathode and the second anode and including a soft-start resistor and a soft-start switch connected in parallel.

These and other features, aspects, and advantages of the present invention will become better understood with reference to the following description and appended claims.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
FIG. 1 is a circuit diagram of a soft-start protection circuit in an embodiment of the present invention;
FIG. 2 is a circuit diagram of a motor driving circuit in an embodiment of the present invention;
FIG. 3A is a partial circuit diagram of the motor driving circuit in an embodiment of the present invention; and
FIG. 3B is a partial circuit diagram of the motor driving circuit in an embodiment of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

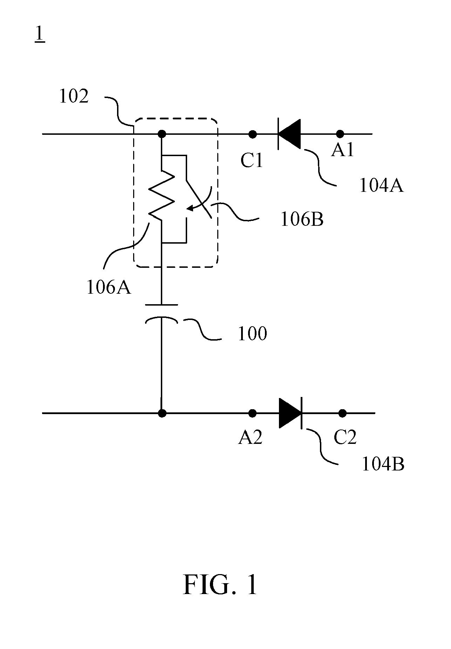

FIG. 1 is a circuit diagram of a soft-start protection circuit 1 in an embodiment of the present invention.

The soft-start protection circuit 1 includes a capacitor 100, a soft-start circuit 102, a first protection diode 104A and a second protection diode 104B. The first protection diode 104A includes a first anode A1 and a first cathode C1. The second protection diode 104B includes a second anode A2 and a second cathode C2.

The soft-start circuit 102 is electrically connected to the capacitor 100 between the first cathode C1 and the second anode A2. The soft-start circuit includes a soft-start resistor 106A and a soft-start switch 106B connected in parallel.

In an embodiment, the soft-start protection circuit 1 is electrically connected between two circuit modules, such as but not limited to an inverter rectifier and an inverter driving circuit, through the first protection diode 104A and the second protection diode 104B. In other embodiments, the soft-start protection circuit 1 can be used to electrically connect to other types of circuit modules.

The first protection diode 104A and the second protection diode 104B are able to restrict the flow of the current such that the energy source of the load is prevented to be provided by circuit path of a self inverter soft-start protection circuit 1 can provide a soft-start mechanism to prevent the capacitor 100 from being damage due to the larger current generated during the initiation of the circuit module that the soft-start protection circuit 1 is electrically connected to.

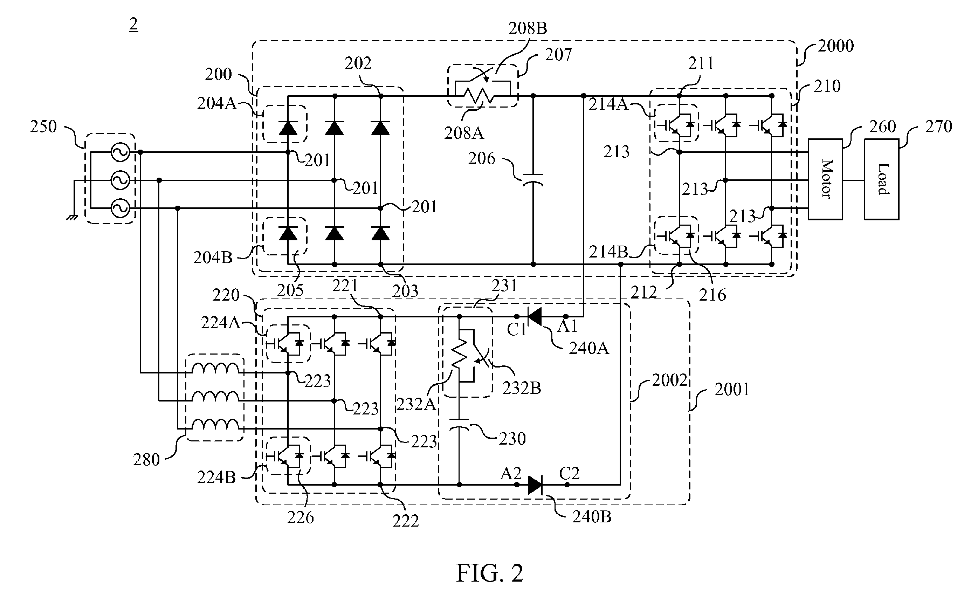

FIG. 2 is a circuit diagram of a motor driving circuit 2 in an embodiment of the present invention. The motor driving circuit 2 includes an else inverter 2000 and a self inverter 2001.

The else inverter 2000 includes an else-inverter rectifier 200 and an else-inverter driving circuit 210.

The else-inverter rectifier 200 includes else-inverter rectifier inputs 201, a first else-inverter rectifier output 202 and a second else-inverter rectifier output 203. The else-inverter rectifier inputs 201 are electrically connected to a power supply 250. In an embodiment, the power supply 250 is a three-phase alternating current power supply.

The else-inverter rectifier 200 includes rectifier units 204A corresponding to upper half bridges. In an embodiment, the number of the rectifier units 204A corresponding to the upper half bridges is three and each of the rectifier units 204A corresponds to one phase of the three-phase alternating current power supply. The else-inverter rectifier 200 further includes rectifier units 204B corresponding to lower half bridges. In an embodiment, the number of the rectifier units 204B corresponding to the lower half bridges is three and each of the rectifier units 204B corresponds to one phase of the three-phase alternating current power supply.

In the present embodiment, each of the rectifier units 204A and 204B includes a rectifier element 205. It is noted that the configuration of the else-inverter rectifier 200 described above is merely an example. In other embodiments, it is possible to use other circuit configurations to implement the else-inverter rectifier 200.

The else-inverter driving circuit 210 includes a first else-inverter driving input 211, a second first else-inverter driving input 212 and first else-inverter driving outputs 213. The first else-inverter driving input 211 is electrically connected to the first else-inverter rectifier output 202, the second else-inverter driving input 212 is electrically connected to the second else-inverter rectifier output 203 and the else-inverter driving outputs 213 are electrically connected to a motor 260. In an embodiment, the motor 260 is a three-phase motor that is further electrically connected to a load 270.

The else-inverter driving circuit 210 includes rectifier units 214A corresponding to upper half bridges. In an embodiment, the number of the rectifier units 214A corresponding to the upper half bridges is three and each of the rectifier units 214A corresponds to one phase of the three-phase motor 260. The else-inverter driving circuit 210 further includes rectifier units 214B corresponding to lower half bridges. In an embodiment, the number of the rectifier units 214B corresponding to the lower half bridges is three and each of the rectifier units 214B corresponds to one phase of the three-phase motor 260.

In the present embodiment, each of the rectifier units 214A and 214B includes a else-inverter power semiconductor switching element 216. It is noted that the configuration of the else-inverter driving circuit 210 described above is merely an example. In other embodiments, it is possible to use other circuit configurations to implement the else-inverter driving circuit 210.

The self inverter 2001 includes a self-inverter driving circuit 220 and a soft-start protection circuit 2002. The self-inverter driving circuit 220 includes a first self inverter driving circuit input 221, a second self inverter driving circuit input 222 and self inverter driving circuit outputs 223. The self inverter driving circuit outputs 223 are electrically connected to the power supply 250. In an embodiment, the motor driving circuit 2 further includes an inductor 280 electrically connected between the self inverter driving circuit outputs 223 and the power supply 250. As a result, the self inverter driving circuit outputs 223 are actually electrically connected to the power supply 250 through the inductor 280.

In an embodiment, the self-inverter driving circuit 220 includes inverter units 224A corresponding to upper half bridges. In an embodiment, the number of the inverter units 224A corresponding to the upper half bridges is three and each of the inverter units 224A corresponds to one phase of the three-phase power supply. The self-inverter driving circuit 220 further includes inverter units 224B corresponding to lower half bridges. In an embodiment, the number of the inverter units 224B corresponding to the lower half bridges is three and each of the inverter units 224B corresponds to one phase of the three-phase power supply.

In the present embodiment, each of the inverter units 224A and 224B includes a self-inverter power semiconductor switching element 226. It is noted that the configuration of the self-inverter driving circuit 220 described above is merely an example. In other embodiments, it is possible to use other circuit configurations to implement the self-inverter driving circuit 220.

The configuration of the soft-start protection circuit 2002 is substantially identical to the configuration of the soft-start protection circuit 1 illustrated in FIG. 1. In the present embodiment, the soft-start protection circuit 2002 includes a self-inverter capacitor 230, a self-inverter soft-start circuit 231, a first protection diode 240A and a second protection diode 240B.

The first protection diode 240A includes a first anode A1 and a first cathode C1, wherein the first anode A1 is electrically connected to the first else-inverter-rectifier output 202 and the first cathode C1 is electrically connected to the first self-inverter-driving-circuit input 221. The second protection diode 240B includes a second anode A2 and a second cathode C2, wherein the second anode A2 is electrically connected to the second self-inverter-driving-circuit input 222 and the second cathode C2 is electrically connected to the second else-inverter-rectifier output 203.

The self-inverter soft-start circuit 231 is electrically connected to the self-inverter capacitor 230 in series between the first cathode C1 and the second anode A1. The self-inverter soft-start circuit 231 includes a self-inverter soft-start resistor 232A and a self-inverter soft-start switch 232B connected in parallel. The self-inverter soft-start circuit 231 provides a soft-start mechanism such that the damage of the self-inverter capacitor 230 due to the transient large current generated during the initialization of the self-inverter driving circuit 220 is avoided.

In an embodiment, the motor driving circuit 2 further includes an else-inverter capacitor 206 and an else inverter soft-start protection circuit 207. The else inverter soft-start protection circuit 207 includes an else-inverter soft-start resistor 208A and an else-inverter soft-start switch 208B and is electrically connected between the first else-inverter rectifier output 202 and the first else-inverter driving input 211. The two ends of the else-inverter capacitor 206 are electrically connected to the first else-inverter driving input 211 and the second else-inverter rectifier output 203. The else inverter soft-start protection circuit 207 provides a soft-start mechanism such that the damage of the else-inverter capacitor 206 due to the transient large current generated during the initialization of the self-inverter driving circuit 220 is avoided.

The operation of the motor driving circuit 2 is described herein.

In an embodiment, the power supply 250 is a three-phase power supply. The self-inverter driving circuit 220 converts the three-phase alternating current power of the three-phase power supply to the direct current power and further transmits the direct current power to the first self-inverter-driving-circuit input 221 and the second self-inverter-driving-circuit input 222. The else-inverter driving circuit 210 further operates to drive the motor 260 according to the direct current power from the self-inverter driving circuit 220. In an embodiment, since the inverter units 214A and 214B of the else-inverter driving circuit 210 include the else-inverter power semiconductor switching element 216, the motor 260 can be driven efficiently due to the characteristics of high efficiency and fast switching speed of the else-inverter power semiconductor switching element 216.

During the operation process described above, the self-inverter soft-start circuit 231 operates according to the voltage across the capacitor 230. In an embodiment, the self-inverter soft-start switch 232B is open-circuited when the voltage across the capacitor 230 is lower than a predetermined value, and is short-circuited when the voltage across the capacitor 230 is larger than or equals to a predetermined value. In an embodiment, when the power supply 250 begins to supply the power to the self-inverter driving circuit 220, the voltage across the self-inverter capacitor 230 is smaller. The self-inverter soft-start switch 232B is therefore open-circuited to allow the current charge the self-inverter capacitor 230 through the self-inverter soft-start resistor 232A. After the condition of the circuit becomes stable, the self-inverter soft-start switch 232B becomes short-circuited.

In an embodiment, the rated capacity of the self-inverter capacitor 230 is related to the load 270 that the motor 260 is further electrically connected to.

The first protection diode 240A, the second protection diode 240B and the soft-start resistor 106A have a current-limiting ability to limit the current passing therethrough in a certain range. As a result, the first protection diode 240A, the second protection diode 240B and the soft-start resistor 106A provide the else-inverter rectifier 200 and the self-inverter driving circuit 220 an over-current protection mechanism.

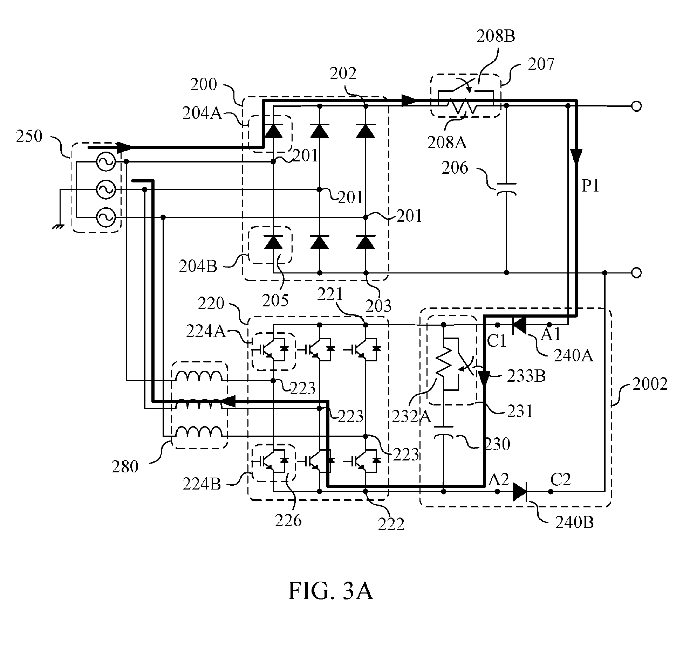

FIG. 3A is a partial circuit diagram of the motor driving circuit 2 in an embodiment of the present invention. In order to clearly describe the embodiment, the else-inverter driving circuit 210, the motor 260 and the load 270 are not illustrated in FIG. 3A.

When the configurations of the else-inverter rectifier 200 and self-inverter driving circuit 220 are different, and soft-start circuit is not presented on the parallel-connection path of the else-inverter rectifier 200, the current charges the capacitor 206 of the self-inverter driving circuit 220 directly from the rectifier units 204A of the else-inverter rectifier 200 through the current path P1 and damages the rectifier units 204A of the else-inverter rectifier 200. As a result, the first protection diode 240A and the soft-start resistor 106A prevent the current on the current path P1 from being too large to protect the rectifier unit 204A.

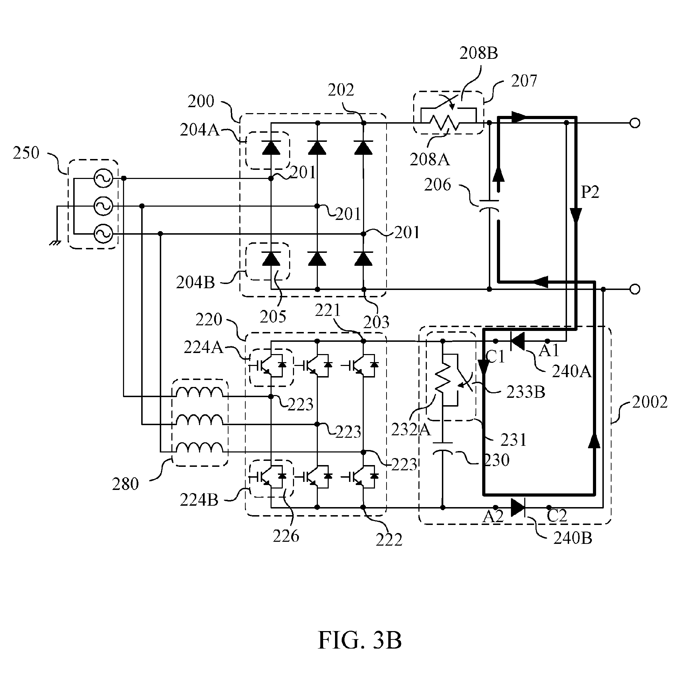

FIG. 3B is a partial circuit diagram of the motor driving circuit 2 in an embodiment of the present invention. In order to clearly describe the embodiment, the else-inverter driving circuit 210, the motor 260 and the load 270 are not illustrated in FIG. 3B.

When the configurations of the else-inverter rectifier 200 and self-inverter driving circuit 220 are different, and soft-start circuit is not presented on the parallel-connection path of the else-inverter rectifier 200, a large inrush current is generated along the current path P2 when the power is supplied to the direct current outputs of the self-inverter driving circuit 220 (i.e. the first self inverter driving circuit input 221 and the second self inverter driving circuit input 222) and damages the rectifier units 204A of the else-inverter rectifier 200. As a result, the first protection diode 240A, the second protection diode 2406 and the soft-start resistor 106A prevent the current on the current path P2 from being too large to protect the rectifier unit 204A.

Consequently, the advantage of the present invention is to provide a over-current protection mechanism by using the first protection diode 240A and the second protection diode 240B in the design of the motor driving circuit such that the else-inverter rectifier 200 and the self-inverter driving circuit 220 are not burned by the over current generated due to the improper circuit operation.

## Claims

1. A soft-start protection circuit, comprising:
a first protection diode comprising a first anode and a first cathode;
a second protection diode comprising a second anode and a second cathode;
a capacitor; and
a soft-start circuit electrically connected to the capacitor between the first cathode and the second anode and comprising a soft-start resistor and a soft-start switch connected in parallel.

2. A motor driving circuit comprising:
an else inverter comprising:
an else-inverter rectifier comprising at least one else-inverter rectifier input, a first else-inverter rectifier output and a second else-inverter rectifier output, wherein the else-inverter rectifier input is electrically connected to a power supply; and
an else-inverter driving circuit comprising a first else-inverter driving input, a second first else-inverter driving input and at least one first else-inverter driving output, wherein the first else-inverter driving input is electrically connected to the first else-inverter rectifier output, the second else-inverter driving input is electrically connected to the second else-inverter rectifier output and the else-inverter driving output is electrically connected to a motor; and
a self inverter comprising:
a self-inverter driving circuit comprising a first self inverter driving circuit input, a second self inverter driving circuit input and at least one self inverter driving circuit output, wherein the self inverter driving circuit output is electrically connected to the power supply; and
a soft-start protection circuit comprising:
a first protection diode comprising a first anode and a first cathode, wherein the first anode is electrically connected to the first else-inverter-rectifier output and the first cathode is electrically connected to the first self-inverter-driving-circuit input;
a second protection diode comprising a second anode and a second cathode, wherein the second anode is electrically connected to the second self-inverter-driving-circuit input and the second cathode is electrically connected to the second else-inverter-rectifier output;
a self-inverter capacitor; and
a self-inverter soft-start circuit electrically connected to the self-inverter capacitor in series between the first cathode and the second anode, wherein the self-inverter soft-start circuit comprises a self-inverter soft-start resistor and a self-inverter soft-start switch connected in parallel.

3. The motor driving circuit of claim 2, further comprising:
an else inverter soft-start protection circuit electrically connected between the first else-inverter rectifier output and the first else-inverter driving input; and
an else-inverter capacitor electrically connected between the first else-inverter driving input and the second else-inverter rectifier output.

4. The motor driving circuit of claim 2, wherein the motor is further electrically connected to a load, and a rated capacity of the self-inverter capacitor is related to the load.

5. The motor driving circuit of claim 2, wherein the else-inverter rectifier comprises a plurality of rectifier units corresponding to an upper half bridge and a lower half bridge.

6. The motor driving circuit of claim 2, wherein each of the else-inverter driving circuit and the self-inverter driving circuit comprises a plurality of inverter units corresponding to an upper half bridge and a lower half bridge.

7. The motor driving circuit of claim 2, wherein the self-inverter converts an alternating current power of the power supply to a direct current power.
